(19) Europäisches Patentamt
European Patent Office
Office européen des brevets

(11) **EP 4 782 890 A1**

(12) **EUROPEAN PATENT APPLICATION**
published in accordance with Art. 153(4) EPC

(43) Date of publication:
29.07.2026 Bulletin 2026/31

(51) International Patent Classification (IPC):
*G02B 5/20* (2006.01)     *C09K 11/65* (2006.01)
*H10H 20/851* (2025.01)

(21) Application number: 24867901.1

(22) Date of filing: 24.07.2024

(52) Cooperative Patent Classification (CPC):
C09K 11/65; G02B 5/20

(86) International application number:
PCT/JP2024/026452

(87) International publication number:
WO 2025/062819 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.09.2023 JP 2023152277

(71) Applicant: Kureha Corporation
Chuo-ku
Tokyo 103-8552 (JP)

(72) Inventors:
• TAKAHASHI, Yuka
 Tokyo 103-8552 (JP)
• ISHIZU, Masaki
 Tokyo 103-8552 (JP)

(74) Representative: Hoefer & Partner Patentanwälte
mbB
Pilgersheimer Straße 20
81543 München (DE)

(54) **SOLID CARBON QUANTUM DOT**

(57)     An object is to provide a novel solid carbon quantum dot exhibiting excellent light emission characteristics when irradiated with light. The solid carbon quantum dot that achieves the aforementioned object has a carbon nitride crystal structure and a graphite crystal structure; an X-ray diffraction spectrum obtained by an X-ray diffraction method includes a peak $P_{CN}$ assigned to the carbon nitride crystal structure and having a maximum value in a range of a diffraction angle $2\theta$ of greater than 26° and 29° or less, and a peak $P_{Gr1}$ assigned to the graphite crystal structure and having a maximum value in a range of a diffraction angle $2\theta$ of 10° or greater and 12° or less; and when a line connecting a point at which a diffraction (scattering) intensity is minimum at a diffraction angle $2\theta$ of 11° or greater and 15° or less, and a point at which a diffraction (scattering) intensity is minimum at a diffraction angle $2\theta$ of 34° or greater and 40° or less is used as a baseline, a half width of a diffraction peak $P_{Gr2}$ assigned to the graphite crystal structure and positioned at a diffraction angle $2\theta$ of 25° is 2° or greater and 20° or less.

[FIG. 1]

**Description**

**TECHNICAL FIELD**

The present invention relates to a solid carbon quantum dot.

**BACKGROUND ART**

As white LEDs, devices have been known in which blue LEDs and an inorganic fluorescent material that is excited by light from the blue LEDs and emits yellow light (wavelengths of about from 520 nm to 580 nm) are combined. However, the inorganic fluorescent material is expensive, and there is a demand for development of a material that can replace the inorganic fluorescent material.

It is known that carbon quantum dots are stable carbon-based fine particles having a particle size of about from several nm to several 10 nm, and that some carbon quantum dots exhibit good fluorescence properties. In addition, there is also an advantage that carbon quantum dots do not have to contain a rare element or the like, unlike the inorganic fluorescent material, and can be produced at a relatively low cost. In recent years, much research has been conducted on carbon quantum dots. However, many of them have insufficient light emission characteristics, and further improvement has been demanded.

Meanwhile, carbon quantum dots are expected to be spread for use other than light-emitting materials. For example, Non-Patent Literature 1 describes use of a mixture of carbon nitride and graphene quantum dots as a material for a humidity sensor. Furthermore, Non-Patent Literature 2 describes simultaneous measurement of urea and dopamine performed by using a mixture of carbon nitride and graphene quantum dots, and the like. Furthermore, Non-Patent Literature 3 describes a mixture of sulfur-doped carbon nitride and graphene quantum dots useful as an electrode catalyst.

**CITATION LIST**

**NON-PATENT LITERATURE**

Non-Patent Literature 1: Morsy et al., Design and implementation of humidity sensor based on carbon nitride modified with graphene quantum dots, Natureportfolio Scientific Reports, 2023, No. 23, 2891

Non-Patent Literature 2: Xia et al., Facile preparation of metal-free graphitic-like carbon nitride/graphene oxide composite for simultaneous determination of uric acid and dopamine, Microchemical Journal, 2023, No. 190, 108726

Non-Patent Literature 3: Chenyu et al., Sulfur-doped graphitic carbon nitride decorated with graphene quantum dots for an efficient metal-free electrocatalyst, Journal or Materials Chemistry A, 2015, 3, 1841-1846

**SUMMARY OF INVENTION**

**TECHNICAL PROBLEM**

However, the mixtures of carbon nitride and graphite (or graphene) quantum dots described in the aforementioned Non-Patent Literature 1, Non-Patent Literature 2, and Non-Patent Literature 3 did not have great difference from known carbon quantum dots in terms of fluorescence characteristics, and could not be used as light-emitting materials.

The present invention has been made in view of the above issues. An object of the present invention is to provide a novel solid carbon quantum dot exhibiting excellent light emission characteristics when irradiated with light.

**SOLUTION TO PROBLEM**

The present invention provides a solid carbon quantum dot having a carbon nitride crystal structure and a graphite crystal structure,

an X-ray diffraction spectrum, obtained by an X-ray diffraction method, including

a peak $P_{CN}$ assigned to the carbon nitride crystal structure and having a maximum value in a range of a diffraction angle $2\theta$ of greater than 26° and 29° or less, and

a peak $P_{Gr1}$ assigned to the graphite crystal structure and having a maximum value in a range of a diffraction angle $2\theta$ of 10° or greater and 12° or less, and when a line connecting a point at which a diffraction (scattering) angle is minimum at a diffraction angle $2\theta$ of 11° or greater and 15° or less, and a point at which a diffraction (scattering) intensity is minimum at a diffraction angle $2\theta$ of 34° or greater and 40° or less is used as a baseline, a half width of a diffraction peak $P_{Gr2}$ assigned to the graphite crystal structure and positioned at a diffraction angle $2\theta$ of 25° being 2° or greater and 20° or less.

## ADVANTAGEOUS EFFECTS OF INVENTION

The present invention provides a novel solid carbon quantum dot exhibiting excellent light emission characteristics when irradiated with light.

## BRIEF DESCRIPTION OF DRAWINGS

FIG. 1 is an X-ray diffraction spectrum of a solid carbon quantum dot prepared in Example 1, an X-ray diffraction spectrum of a commercially available carbon nitride, and an X-ray diffraction spectrum of a commercially available graphene carbon quantum dot.

FIG. 2A includes X-ray diffraction spectra of carbon nitride, a graphite carbon quantum dot, and a mixture of these described in Non-Patent Literature 1. FIG. 2B includes X-ray diffraction spectra of carbon nitride, a graphene carbon quantum dot, and a mixture of these described in Non-Patent Literature 2. FIG. 2C includes X-ray diffraction spectra of sulfur carbon nitride, a graphene quantum dot, and a mixture of these described in Non-Patent Literature 3.

FIG. 3A and FIG. 3B are images obtained in observation of a solid carbon quantum dot prepared in Example 1 by using a transmission electron microscope.

FIG. 4 is an analysis result of a solid carbon quantum dot prepared in Example 1 by using an infrared spectroscopy method.

FIG. 5A is an analysis result of a solid carbon quantum dot prepared in Example 1 by an X-ray photoelectron spectroscopy spectrum. FIG. 5B is an analysis result of a commercially available carbon nitride by an X-ray photoelectron spectroscopy spectrum.

FIG. 6 is an analysis result for boron of a solid carbon quantum dot prepared in Example 1 by an X-ray photoelectron spectroscopy spectrum.

FIG. 7 includes an X-ray diffraction spectrum of an unpurified solid carbon quantum dot and a purified solid carbon quantum dot prepared in Example 1, an X-ray diffraction spectrum of a commercially available carbon nitride, and an X-ray diffraction spectrum of a commercially available graphene carbon quantum dot.

## DESCRIPTION OF EMBODIMENTS

In the present specification, numerical ranges indicated by "to" refer to numerical ranges including the numerical values described before and after "to".

The solid carbon quantum dot according to an embodiment of the present invention is a novel quantum dot having a carbon nitride crystal structure and a graphite crystal structure. In the present specification, "crystal structure of carbon nitride" means a crystal structure in which six-membered ring structures composed of carbon atoms and nitrogen atoms are linked in a planar fashion and is also called graphitic carbon nitride ($g\text{-}C_3N_4$). Furthermore, in the present specification, "graphite crystal structure" includes a structure in which graphene is present in a monolayer as well as a structure in which a plurality of graphenes are layered. In the solid carbon quantum dot according to an embodiment of the present invention, some of carbons in the crystal structure of the graphite may be substituted with other atoms (e.g., nitrogen atoms). Furthermore, the carbon nitride crystal structure and the graphite crystal structure described above may be bonded to another atom (e.g., a boron atom, an alkali metal, an alkaline earth metal, and the like contained in a raw material) and may be bonded to a functional group derived from a raw material.

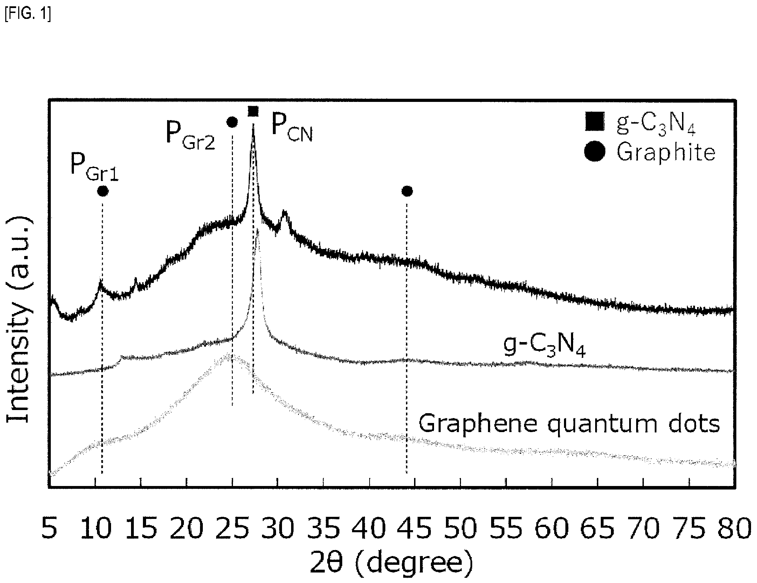

The solid carbon quantum dots of the present invention are solid at 25°C under 1 atm. Furthermore, in an XRD spectrum obtained by analysis using the X-ray diffraction (hereinafter, also referred to as "XRD") method, the solid carbon quantum dot has a peak at a specific position. FIG. 1 shows an XRD spectrum of the solid carbon quantum dot according to an embodiment of the present invention prepared in Example 1 described below. As shown in FIG. 1, the solid carbon quantum dot according to an embodiment of the present invention has a peak $P_{CN}$ assigned to the carbon nitride crystal structure and having a maximum value in a range of a diffraction angle $2\theta$ of greater than 26° and 29° or less. Furthermore, the solid carbon quantum dot according to an embodiment of the present invention also has a peak $P_{Gr1}$ assigned to the graphite crystal structure and having a maximum value in a range of a diffraction angle $2\theta$ of 10° or greater and 12° or less. The peak $P_{Gr1}$ is a peak assigned to a structure in which graphite is partially oxidized. The peak $P_{Gr1}$ is readily observed when unreacted components and side reaction components are removed and crystallization occurs in the production of the carbon quantum dot. The solid carbon quantum dot according to an embodiment of the present invention also has a diffraction peak $P_{Gr2}$ assigned to the graphite crystal structure and positioned at a diffraction angle $2\theta$ of 25° in the XRD spectrum. Taking a line connecting a point at which a diffraction (scattering) intensity is minimum at a diffraction angle $2\theta$ of 11° or greater and 15° or less, and a point at which a diffraction (scattering) intensity is minimum at a diffraction angle $2\theta$ of 34° or greater and 40° or less as a baseline, when a half width of a diffraction peak $P_{Gr2}$ positioned at a diffraction angle $2\theta$ of 25° is determined, the half width is 2° or greater and 20° or less. A half width of a peak in an XRD spectrum indicates a crystallite size of a crystal structure. The half width of the peak $P_{Gr2}$ assigned to the graphite crystal structure indicates a size of a crystallite of the graphite crystal structure. A larger half width thereof indicates a smaller crystallite size. In the case where the half width of the peak $P_{Gr2}$ described above is 20°, the crystallite size of the graphite is approximately and substantially a size of two benzene rings. Meanwhile, when the half width of the peak $P_{Gr2}$ is 2° or greater, it can be said that the graphite is present as a microcrystal. When the half width of the peak $P_{Gr2}$ described above is 2° or greater and 20° or less, the size of the microcrystal of the graphite is adequately small, the number of points of contact with the carbon nitride crystal structure increases, and thus the solid carbon quantum dot exhibits excellent light emission characteristics. The half width of the peak $P_{Gr2}$ is more preferably 8° or greater and 15° or less. Note that, in the XRD spectrum of the solid carbon quantum dot according to an embodiment of the present invention, usually, another peak assigned to the graphite crystal structure is also observed in a range of a diffraction angle $2\theta$ of 40° or greater and 45° or less.

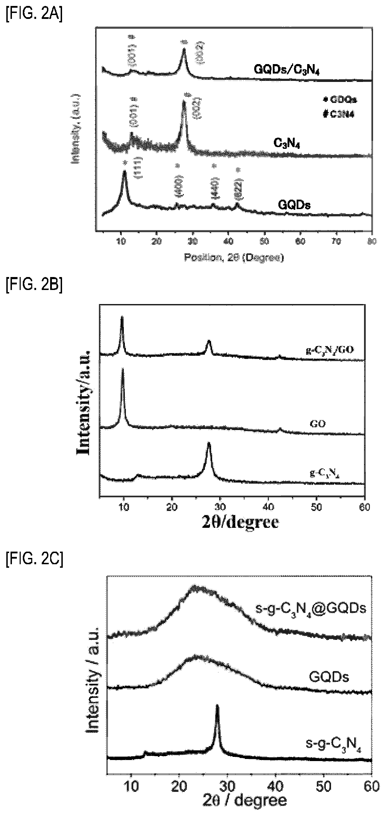

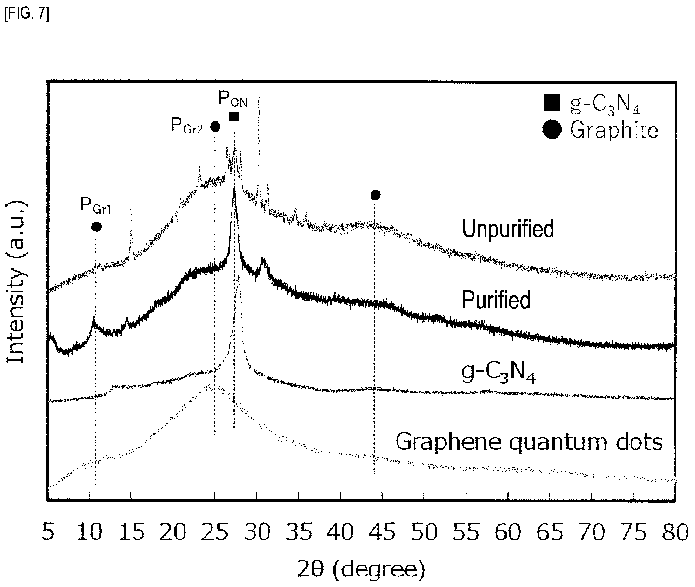

Note that the XRD spectrum of the solid carbon quantum dot according to an embodiment of the present invention is obviously different from an XRD spectrum of a mixture obtained by separately synthesizing carbon nitride and graphite (or graphene) quantum dots and mixing these (mixture described in the aforementioned Non-Patent Literature 1 and Non-Patent Literature 2). FIG. 2A shows the XRD spectrum described in Non-Patent Literature 1 (Figure 7 of Non-Patent Literature 1). FIG. 2B shows the XRD spectrum described in Non-Patent Literature 2 (Fig. 1D of Non-Patent Literature 2). FIG. 2C shows the XRD spectrum described in Non-Patent Literature 3 (Fig. 3(d) of Non-Patent Literature 2). As shown in FIG. 2A, FIG. 2B, and FIG. 2C, when carbon nitride and graphite are only mixed, a peak of a crystal structure derived from graphite (graphene) is not observed in the range of a diffraction angle $2\theta$ of 23° or greater and 26° (FIG. 2A and FIG. 2B) or a peak of a crystal structure derived from carbon nitride is not observed in the range of a diffraction angle $2\theta$ of greater than 26° and 29° or less (FIG. 2C). That is, the carbon quantum dot according to an embodiment of the present invention is a substance having a crystal structure different from that of a mixture of carbon nitride and graphite quantum dots. It is conceived that the crystal structure contributes to excellent light emission characteristics.

The reason why the solid carbon quantum dot according to an embodiment of the present invention exhibits excellent light emission characteristics is not clear. However, it is conceived that, in the solid carbon quantum dot, the carbon nitride crystal structure and the graphite microcrystal structure are composited in a complex manner at a molecular level because covalent bonds exist between them but the carbon nitride crystal structure and the graphite microcrystal structure are not independently mixed. It is thus conceived that, in the solid carbon quantum dot, a conjugated system is spread due to complex composition of the carbon nitride crystal structure and graphite at a molecular level. Furthermore, this may also be due to the boron atom and the alkali metal and/or the alkaline earth metal present in the system during production of the carbon quantum dots. In either case, the solid carbon quantum dots according to an embodiment of the present invention have remarkably excellent light emission characteristics than those of known quantum dots and, for example, exhibit significantly high internal quantum efficiency when irradiated with an excitation light at a wavelength of approximately 400 nm.

The chemical composition of the solid carbon quantum dot according to an embodiment of the present invention is not particularly limited, and the amount of carbon atoms with respect to the total amount of the solid carbon quantum dots is preferably 10 mass% or greater and 25 mass% or less, and more preferably 12 mass% or greater and 18 mass% or less. Furthermore, the amount of nitrogen atoms with respect to the total amount of the solid carbon quantum dots is preferably 15 mass% or greater and 35 mass% or less, and more preferably 20 mass% or greater and 30 mass% or less. Here, the mass ratio of the amount of nitrogen atoms to the amount of carbon atoms is preferably 1.0 or greater and 2.0 or less, and more preferably 1.2 or greater and 1.8 or less. Furthermore, the molar ratio of the amount of nitrogen atoms to the amount of carbon atoms is preferably 0.8 or greater and 1.7 or less, and more preferably 1.0 or greater and 1.5 or less. Furthermore, the amount of boron atoms with respect to the total amount of the solid carbon quantum dots is preferably 5 mass% or greater and 30 mass% or less, and more preferably 10 mass% or greater and 15 mass% or less. Furthermore, the mass ratio of the amount of boron atoms to the amount of carbon atoms is preferably 0.1 or greater and 1.5 or less, and more preferably 0.5 or greater and 1.0 or less. Furthermore, the molar ratio of the amount of boron atoms to the amount of carbon atoms is preferably 0.1 or greater and 1.7 or less, and more preferably 0.5 or greater and 1.2 or less. Furthermore, the total amount of alkali metal and alkaline earth metal with respect to the total amount of the solid carbon quantum dots is preferably 0.1 mass% or greater and 30 mass% or less, and more preferably 3.0 mass% or greater and 8.0 mass% or less.

The average particle size measured by observing the solid carbon quantum dots described above by using an atomic force microscope (AFM) is preferably 1 nm or greater and 100 nm or less, and more preferably 1 nm or greater and 80 nm or less. When the average particle size of the carbon quantum dots is in this range, characteristics of quantum dots tend to be adequately achieved. Note that the average particle size of the carbon quantum dots described above is a value calculated by measuring diameters of 3 or more carbon quantum dots by AFM and determining their average value.

Furthermore, the wavelength of light to excite the solid carbon quantum dots is not particularly limited, and usually, the solid carbon quantum dots described above can be excited by light at a wavelength of 200 nm or greater and a wavelength of 780 nm or less. Furthermore, the maximum emission wavelength of fluorescence emitted by the solid carbon quantum dots due to the excitation light of the wavelength is usually 380 nm or greater and 780 or less and, for example, can be 440 nm or greater and 580 nm or less. Note that, when irradiated with the excitation light, the light emitted by the solid carbon quantum dots described above is mainly fluorescence. The maximum emission wavelength described above can be specified by acquiring a spectral distribution when light having a predetermined wavelength is irradiated using a spectrofluorophotometer or the like equipped with an integrating sphere unit.

Furthermore, for the solid carbon quantum dots, the internal quantum efficiency of the solid carbon quantum dots when irradiated with light at a wavelength of 200 to 780 nm can be 50% or greater, and 55% or greater. Furthermore, for example, the internal quantum efficiency of the solid carbon quantum dots when irradiated with light at a wavelength of 400 nm is preferably 50% or greater, more preferably 55% or greater, and even more preferably 60% or greater. The internal quantum efficiency can also be specified by acquiring a spectral distribution when light having a wavelength of 400 nm is irradiated using a spectrofluorophotometer or the like equipped with an integrating sphere unit.

Method for Producing Solid Carbon Quantum Dot

The method for producing the aforementioned solid carbon quantum dots is not particularly limited and, for example, production can be performed by the following two production methods. These methods are described in detail below.

(1) First Production Method

The first production method is a method including preparing a uniform mixture containing at least a carbon atom, a nitrogen atom, a boron atom, and an alkali metal and/or an alkaline earth metal (mixture preparation step), heating the mixture with substantially no solvent (heating and synthesis step), and purifying the obtained composition (purification step). Each step will be described below.

• Mixture Preparation Step

In the mixture preparation step, a uniform mixture containing at least a carbon atom, a nitrogen atom, a boron atom, and an alkali metal and/or an alkaline earth metal is prepared. As specific raw materials, a combination of one type or two or more types of organic compounds (however, except those containing a boron atom) having a reactive group and one type or two or more types of boron compounds containing a boron atom is preferably used. Furthermore, one or both of the organic compound and the boron compound described above preferably contain an alkali metal and/or an alkaline earth metal. Note that, in the present specification, a compound containing a boron atom is referred to as "boron compound". Even when a molecule contains a reactive group, if the molecule contains a boron atom, the molecule is taken as a boron compound.

The type of the alkali metal or alkaline earth metal that can be contained in the organic compound or boron compound is not particularly limited, and examples thereof include lithium, sodium, potassium, magnesium, calcium, and barium. However, sodium, potassium, or calcium is preferred from the viewpoint of reactivity, safety, availability of a material, and the like.

The total amount of the alkali metal and the alkaline earth metal in the mixture is preferably 0.1 mol% or greater and 30 mol% or less, more preferably 0.5 mol% or greater and 20 mol% or less, and even more preferably 1 mol% or greater and 10 mol% or less, with respect to the sum of the numbers of moles of carbon atoms and nitrogen atoms contained in the organic compound and the boron compound. Note that the alkali metal and the alkaline earth metal are preferably mainly derived from the organic compound and the boron compound, but a part thereof may be derived from another compound.

The organic compound is only required to be a compound having a reactive group. In the present specification, the "reactive group" means a group bonding to a carbon atom in the organic compound, is a group for causing polycondensation reaction or the like of the organic compounds in the heating step described below, and is a group contributing to the formation of a main backbone of the solid carbon quantum dots. Specific examples of the reactive group include a carboxy group, a hydroxy group, an epoxy group, an amide group, a sulfo group, an amino group, and a group in which an alkali metal and/or an alkaline earth metal is bonded or coordinated to these groups.

The organic compound may contain only one type of compound, or two or more types of compounds. However, any one type of organic compound always contains a nitrogen atom. The amount of nitrogen atoms is preferably 30 mass% or greater and 50 mass% or less, more preferably 33 mass% or greater and 50 mass% or less, and even more preferably 36 mass% or greater and 48 mass% or less, with respect to the total amount of the organic compound. When the amount of nitrogen atoms in the organic compound is 30 mass% or greater and 50 mass% or less, the carbon nitride crystal structure and the graphite crystal structure described above are readily formed.

The organic compound may be composed only of a compound containing a nitrogen atom and a reactive group (hereinafter, also referred to as "nitrogen-containing organic compound") or may be composed of a compound containing no nitrogen atom and containing a reactive group (hereinafter, also referred to as "nitrogen-free organic compound") and a nitrogen-containing organic compound.

Examples of the nitrogen-containing organic compound include amine compounds, nitrogen-containing saccharides, imidazoles, triazines, triazoles, triazenes, guanidines and oximes, and salts of these compounds with alkali metals and/or alkaline earth metals. The organic compound described above may use only one type of these, or two or more types of these. Furthermore, these compounds may be in a solid or liquid state at normal temperature.

Examples of the amine compound include 1,2-phenylenediamine, 1,3-phenylenediamine, 1,4-phenylenediamine, 2,6-diaminopyridine, urea, thiourea, ammonium thiocyanate, ethanolamine, 1-amino-2-propanol, melamine, cyanuric acid, barbituric acid, folic acid, ethylenediamine, diethylenetriamine, triethylenetetramine, polyethyleneimine, dicyandiamide, guanidine, aminoguanidine, formamide, glutamic acid, aspartic acid, cysteine, arginine, histidine, lysine, glutathione, RNA, DNA, cysteamine, methionine, homocysteine, taurine, thiamine, N-[3-(trimethoxysilyl)propyl]ethylenediamine, and 4,5-difluoro-1,2-phenylenediamine, sulfanilic acid, o-phosphoserine, adenosine 5'-triphosphate, guanidine phosphate, guanylurea phosphate, and 3-aminopropyltriethoxysilane.

Examples of the nitrogen-containing saccharide include glucosamine, chitin, and chitosan. Examples of the imidazole include 1-(trimethylsilyl)imidazole. Examples of the triazines include 1,2,4-triazine. Examples of triazoles include 1,3,5-triazine, 1,2,3-triazole, and 1,2,4-triazole. Examples of the triazenes include 1,3-diphenyltriazene and 1-methyl-3-p-tolyltriazene. Examples of guanidines include guanidine and arginine. Examples of oximes include benzamidoxime and p-benzoquinone dioxime. Examples of the alkali metal salts and alkaline earth metal of the above compounds include sodium glutamate and sodium imidazole-4-acetate.

Among these, the nitrogen-containing organic compound is preferably an amine compound from the perspectives of availability and reactivity in the heating step described below.

Meanwhile, examples of the nitrogen-free organic compound include carboxylic acids, alcohols, phenols and saccharides, and salts of these compounds with alkali metals and/or alkaline earth metals. The organic compound may contain only one of these, or two or more of these. Furthermore, these compounds may be in a solid or liquid state at normal temperature.

The carboxylic acid is any compound having one or more carboxy groups in the molecule (however, except those corresponding to nitrogen-containing organic compounds, phenols, or saccharides). Examples of the carboxylic acid include a monocarboxylic acid, such as formic acid, acetic acid, 3-mercaptopropionic acid, and $\alpha$-lipoic acid; a polyvalent carboxylic acid that is divalent or higher, such as oxalic acid, malonic acid, succinic acid, maleic acid, fumaric acid, itaconic acid, polyacrylic acid, (ethylenedithio)diacetic acid, thiomalic acid, tetrafluoroterephthalic acid, and 2-phosphonobutane-1,2,4-tricarboxylic acid; and a hydroxy acid, such as citric acid, glycolic acid, lactic acid, tartaric acid, malic acid, and 5-sulfosalicylic acid.

The alcohol is preferably a monohydric alcohol having one hydroxy group and 6 or more carbons, or a polyhydric alcohol having two or more hydroxy groups (however, except those corresponding to nitrogen-containing organic compounds, carboxylic acids, phenols, or saccharides). Examples of the monohydric alcohol having 6 or more carbons include a higher alcohol such as hexanol or octanol. Meanwhile, examples of the polyhydric alcohols include ethylene glycol, glycerol, erythritol, pentaerythritol, ascorbic acid, polyethylene glycol, and sorbitol.

The phenols are any compound having a structure in which a hydroxy group is bonded to a benzene ring (however, except nitrogen-containing organic compound). Examples of the phenols include phenol, catechol, resorcinol, hydroquinone, phloroglucinol, pyrogallol, 1,2,4-trihydroxybenzene, gallic acid, tannin, lignin, catechin, anthocyanin, rutin, chlorogenic acid, lignan, and curcumin.

Examples of the saccharides as a nitrogen-free organic compound include glucose, sucrose, and cellulose. Examples of the alkali metal salts and alkaline earth metal salts of the above compounds include trisodium citrate dihydrate, tripotassium citrate monohydrate, sodium ascorbate, and calcium acetate.

The nitrogen-free organic compound described above preferably contains a reactive group that efficiently proceed a condensation reaction with the nitrogen-containing organic compound, and is preferably a carboxylic acid, an alcohol, a phenol, an alkali metal salt thereof, or an alkaline earth metal salt thereof.

Furthermore, the total amount of the organic compound (the nitrogen-containing organic compound and the nitrogen-free organic compound) described above in the mixture prepared in the mixture preparation step is preferably 20 mass% or greater and 60 mass% or less, and more preferably 35 mass% or greater and 55 mass% or less, with respect to the total amount of the organic compound and the boron compound. When the amount of the organic compound with respect to the total amount of the organic compound and the boron compound is in the range described above, solid carbon quantum dots having the carbon nitride crystal structure and the graphite crystal structure described above is readily obtained.

The boron compound used in the preparation of the mixture is only required to be a compound containing a boron atom and may be, for example, elemental boron or a compound containing boron. The boron compound may contain only one type of compound, or two or more types of compounds.

Specific examples of the boron compound include boron, boric acid, sodium tetraborate, boric oxide, trimethyl borate, triethyl borate, trioctadecyl borate, triphenyl borate, 2-ethoxy-4,4,5,5-tetramethyl-1,3,2-dioxaborolane, triethanolamine borate, 2,4,6-trimethoxyboroxine, tris(trimethylsilyl) borate, tris(2-cyanoethyl) borate, 3-aminophenylboronic acid, 2-anthratheneboronic acid, 9-anthratheneboronic acid, phenylboronic acid, 3,5-bis(trifluoromethyl)phenylboronic acid, 4,4'-biphenyldiboronic acid, 2-bromophenylboronic acid, 4-bromo-1-naphthaleneboronic acid, 3-bromo-2-fluorophenylboronic acid, 4-carboxyphenylboronic acid, 3-cyanophenylboronic acid, 4-cyano-3-fluorophenylboronic acid, 3,5-difluorophenylboronic acid, 4-(diphenylamino)phenylboronic acid, 3-fluorophenylboronic acid, 3-hydroxyphenylboronic acid, 4-mercaptophenylboronic acid, 1-naphthaleneboronic acid, 9-phenanthreneboronic acid, 1,4-phenylenediboronic acid, 1-pyreneboronic acid, 2-aminopyrimidine-5-boronic acid, 2-bromopyridine-3-boronic acid, 2-fluoropyridine-3-boronic acid, 4-pyridylboronic acid, quinoline-8-boronic acid, 4-aminophenylboronic acid pinacol, 3-hydroxyphenylboronic acid pinacol, 4-(4,4,5,5-tetramethyl-1,3,2-dioxaborolan-2-yl)pyridine, diboronic acid, sodium borohydride, sodium tetrafluoroborate, 1-ethyl-3-methylimidazolium tetrafluoroborate, boron trifluoride, and boron tribromide.

Note that the amount of boron atoms in the boron compound is preferably 3 mass% or greater, and more preferably 5 mass% or greater, with respect to the total amount of the boron compound. When the amount of boron atoms in the boron compound is in the range described above, the boron atoms can be arranged on a surface of the carbon quantum dot.

The total amount of the boron compound described above is preferably 40 mass% or greater and 80 mass% or less, more preferably 42 mass% or greater and 70 mass% or less, and even more preferably 45 mass% or greater and 65 mass% or less, with respect to the total amount of the organic compound and the boron compound. When the amount of the boron compound with respect to the total amount of the organic compound and the boron compound is in the range described above, solid carbon quantum dots having the carbon nitride crystal structure and the graphite crystal structure described above are readily prepared.

Note that, in this step, a compound other than the organic compound and the boron compound may be further mixed as long as the object and effect of the present invention are not impaired. However, the amount of the organic compound and the boron compound in the mixture is preferably 50 mass% or greater, and more preferably 70 mass% or greater, with respect to the total amount of the mixture. When the total amount of the organic compound and the boron compound described above is 50 mass% or greater, the aforementioned solid carbon quantum dots can be prepared efficiently. Note that the compound other than the organic compound and the boron compound may be a compound containing an alkali metal and/or an alkaline earth metal.

Furthermore, examples of the compound other than the organic compound and the boron compound include a compound containing a phosphorus atom, a sulfur atom, a silicon atom, a fluorine atom, or the like and containing no reactive group described above (hereinafter, also referred to as "another compound"). When such another compound is mixed in this step, solid carbon quantum dots containing a heteroatom besides nitrogen and boron can be obtained. The mixture may contain only one or two or more of such other compounds.

Examples of the compound containing a phosphorus atom include elemental phosphorus, phosphoric acid, phosphorus oxide, 1-hydroxyethane-1,1-diphosphonic acid, phytic acid, ammonium phosphate, diammonium hydrogen phosphate, ammonium dihydrogen phosphate, o-phosphorylethanolamine, phosphorus chloride, phosphorus bromide, triethyl phosphonoacetate, tetrakis(hydroxymethyl)phosphonium chloride, methyl phosphate, triethyl phosphite, nitrilotris(methylenephosphonic acid), and N,N,N',N'-ethylenediaminetetrakis(methylenephosphonic acid).

Examples of the compound containing a sulfur atom include sulfur, sodium thiosulfate, sodium sulfide, sodium sulfate, sulfuric acid, methane sulfonic acid, p-toluenesulfonic acid, and sodium hydrosulfide.

Examples of the compound containing a silicon atom include tetrachlorosilane and tetraethoxysilane.

Examples of the compound containing a fluorine atom include 2,2,3,3,4,4-hexafluoro-1,5-pentanediol diglycidyl ether and sodium fluoride.

The amount of such other compound in the mixture is appropriately selected based on the amount of the desired heteroatom and, usually, is preferably from 0 mass% to 20 mass%, and more preferably from 3 mass% to 10 mass%, with respect to the total amount of the mixture. When the amount of such other compound is 3 mass% or greater, addition effect of such other compound tends to be achieved. Meanwhile, when the amount of such other compound is 10 mass% or less, the amounts of the organic compound and the boron compound are relatively adequately large, and thus the solid carbon quantum dots can be prepared more efficiently.

In this step, a layered clay mineral may be further added. When the layered clay mineral is added, solid carbon quantum dots having a uniform size can be easily prepared using an interlayer space of the layered clay mineral as a template. Examples of the layered clay mineral include a smectite, a layered double hydroxide, a kaolinite, and a mica. Preferred among these is a smectite or a layered double hydroxide in terms of having an average interlayer spacing appropriate for forming the solid carbon quantum dots. Although the layered clay mineral may contain an alkali metal and/or an alkaline earth metal, the alkali metal or the alkaline earth metal does not substantially affect the composition of the carbon quantum dots, and thus, in the present specification, the amount of the alkali metal and/or the alkaline earth metal contained in the layered clay mineral is not included in the amount of the alkali metal and/or the alkaline earth metal in the mixture.

The smectite is a clay mineral that swells with water or the like, and examples include saponite, montmorillonite, hectorite, beidellite, nontronite, sauconite, and stevensite.

Meanwhile, the layered double hydroxide is a double hydroxide obtained by forming a solid solution of a divalent metal oxide and a trivalent metal ion, and examples thereof include hydrotalcite, hydrocalumite, hydromagnesite, and pyroaurite.

To adjust the average interlayer spacing of the layered clay mineral, the layered clay mineral may be swelled with a solvent. Examples of the solvent include water, methanol, ethanol, hexane, toluene, chloroform, dimethylformamide, and dimethyl sulfoxide. However, in the heating step described below, heating is performed with substantially no solvent. Thus, the amount of the solvent is preferably small, and the boiling point of the solvent is preferably lower than the temperature at which the organic compound and the like are carbonized in the heating step (hereinafter, also referred to as "heating temperature"). In other words, the amount and the type of solvent are preferably adjusted in a manner that all the solvent is volatilized before the temperature of the mixture reaches the heating temperature in the heating step described below.

Note that the amount of the layered clay mineral in the mixture is preferably from 0 mass% to 20 mass%, and more preferably from 0 mass% to 10 mass%, with respect to the total amount of the mixture, and even more preferably, substantially no layered clay mineral is contained. Note that substantially not contained means 5 mass% or less with respect to the total amount of the mixture. Note that the amount of the layered clay mineral is more preferably 3 mass% or less, and even more preferably 1 mass% or less, with respect to the total amount of the mixture, and the layered clay mineral is particularly preferably not contained at all. When the amount of the layered clay mineral is 20 mass% or less, the amounts of the organic compound and the boron compound are relatively adequately large, and thus the solid carbon quantum dots can be prepared more efficiently.

The mixing method for the mixture is not particularly limited as long as the method can uniformly mix the organic compound, the boron compound, and optionally the other compound. For example, mixing may be performed while grinding is performed in a mortar, or mixing may be performed while crushing is performed by a ball mill or the like. When the mixture is solid, the mixture is preferably mixed in a manner that the mixture has a substantially uniform particle size.

When the mixture described above is solid, the particle size of the mixture can be evaluated by measuring the major axis of each particle by using an optical microscope. The average particle size of the mixture is preferably 0.1 $\mu$m or greater and 300 $\mu$m or less, and more preferably 0.1 $\mu$m or greater and 100 $\mu$m or less. Furthermore, 99% of the particle sizes of the particles contained in the mixture are preferably 0.1 $\mu$m or greater and 300 $\mu$m or less, and more preferably 0.1 $\mu$m or greater and 100 $\mu$m or less. When the particle size of the mixture is in the range described above, the mixture tends to be mixed uniformly, and solid carbon quantum dots can be prepared efficiently while presence of residual unreacted components is suppressed.

Furthermore, in a case where the organic compound or the boron compound or the other compound is a liquid, mixing may be performed by dissolving, blending, or dispersing a solid component in a liquid component. Alternatively, mixing may be performed by dissolving, blending, or dispersing each material in a small amount of a solvent. In this case, the amount and the type of the solvent are adjusted in a manner that heating in the heating step described below can be performed with substantially no solvent. Specifically, the amount and the type of the solvent are preferably adjusted in a manner that all the solvent is volatilized before the temperature of the mixture reaches the heating temperature. Note that, in the present specification, a solvent means a compound that is liquid under 1 atm at 25°C and that does not correspond to the organic compound and the boron compound described above.

• Heating Step

In the heating step, the mixture adjusted in the mixture preparation step described above is heated with substantially no solvent. In the present specification, "with substantially no solvent" means an amount of a solvent in the mixture being 5 mass% or less with respect to the total amount of the mixture at the time when a temperature reaches the temperature for carbonizing the organic compound and the like (heating temperature). The amount of the solvent in the mixture at the heating temperature is preferably 2 mass% or less, and even more preferably 0 mass%. Thus, as described above, as long as the solvent can be adequately volatilized before the heating temperature is reached, the mixture may contain a solvent at the start of the heating. Note that compounds that are raw materials of the solid carbon quantum dots, such as the organic compound and the boron compound, may be liquid at the heating temperature.

The heating method of the mixture is only required to be a method that can produce the solid carbon quantum dots by carbonizing the organic compound and the like, and examples thereof include heating by a heater and irradiation of electromagnetic wave.

In a case where the mixture is heated by a heater or the like, the heating temperature is preferably 70°C or higher and 700°C or lower, more preferably 100°C or higher and 500°C or lower, and even more preferably 100°C or higher and 300°C or lower. Furthermore, the retention time at the heating temperature is preferably 0.01 hours or longer and 45 hours or less, more preferably 0.1 hours or longer and 30 hours or less, and even more preferably 0.5 hours or longer and 10 hours or less. The particle size and the emission wavelength of the resulting solid carbon quantum dot can be adjusted by the heating time. Furthermore, here, heating may be performed in a non-oxidizing atmosphere while an inert gas such as nitrogen is circulated.

In the case where irradiation with an electromagnetic wave (e.g., microwave) is performed, the wattage is preferably 1 W or greater and 1500 W or less, and more preferably 1 W or greater to 1000 W or less. Furthermore, the heating time by the electromagnetic wave (e.g., microwave) is preferably 0.01 hours or longer and 10 hours or less, more preferably 0.01 hours or longer and 5 hours or less, and even more preferably 0.01 hours or longer and 1 hour or less. The particle size and the emission wavelength of the resulting solid carbon quantum dot can be adjusted by the irradiation time of the electromagnetic wave.

The electromagnetic wave irradiation described above can be performed by, for example, a semiconductor type electromagnetic wave radiation device. The irradiation with the electromagnetic wave is preferably performed while the temperature of the aforementioned mixture is checked. For example, the electromagnetic wave irradiation is preferably performed while the heating temperature is adjusted to 70°C or higher and 700°C or lower.

• Purification Step

In the purification step, the composition obtained in the heating step described above is purified, and unreacted components and side reaction components are removed. The method of purification is not particularly limited, and washing with an organic solvent is preferred.

The organic solvent used in the washing may contain only one type of compound or may contain two or more types of compounds. The organic solvent may be a polar solvent or a nonpolar solvent, and may be a mixed solvent of these. To remove unreacted components and side reaction components derived from the compound having a reactive group used in the mixture preparation step described above, at least one type of polar solvent is more preferably contained.

Specific examples of the polar solvent include methanol, ethanol, butanol, 1-propanol, dichloromethane, acetone, ethyl acetate, and acetonitrile. Among these, use of a mixed organic solvent, in which methanol and dichloromethane are mixed at a ratio of methanol/dichloromethane of 1:1, is preferred.

(2) Second Production Method

The second production method is a method including preparing a uniform mixture containing at least a carbon atom, a nitrogen atom, and a boron atom (mixture preparation step), mixing this mixture and an aqueous solution containing an alkali metal and/or an alkaline earth metal (aqueous solution mixing step), heating the mixture obtained after the mixing with the aqueous solution described above with substantially no solvent (heating and synthesis step), and purifying the obtained composition (purification step). Note that, in the aqueous solution mixing step, the amount of the aqueous solution to be mixed with the aforementioned mixture is preferably 200 mass% or less with respect to the amount of the mixture. In the present specification, "with substantially no solvent" means an amount of a solvent in the mixture being 5 mass% or less with respect to the total amount of the mixture at the time when a temperature reaches the temperature for carbonizing the organic compound and the like (heating temperature), as described above. In the second production method, the aqueous solution containing an alkali metal and/or an alkaline earth metal is added in the aqueous solution mixing step. However, since the amount of the aqueous solution is sufficiently small, water in the aqueous solution is volatilized before the temperature reaches the heating temperature for carbonizing the organic compound and the like. Thus, the heating step can be performed with substantially no solvent. Each step will be described below.

• Mixture Preparation Step

In the mixture preparation step, a uniform mixture containing at least a carbon atom, a nitrogen atom, and a boron atom is prepared. More specifically, a mixture is prepared by mixing an organic compound, which contains a reactive group and does not contain a boron atom, and a boron compound. The organic compound and the boron compound used in this step may or may not contain an alkali metal or an alkaline earth metal.

The organic compound may contain only one type of compound, or two or more types of compounds. However, any one type of organic compound always contains a nitrogen atom. The amount of the nitrogen atoms is preferably 20 mass% or greater and 50 mass% or less, more preferably 33 mass% or greater and 50 mass% or less, and even more preferably 35 mass% or greater and 48 mass% or less, with respect to the total amount of the organic compound. When the amount of the nitrogen atoms in the organic compound is 20 mass% or greater and 50 mass% or less, the carbon nitride crystal structure and the graphite crystal structure described above are readily formed.

The organic compound may be composed only of a compound containing a nitrogen atom and a reactive group (hereinafter, also referred to as "nitrogen-containing organic compound") or may be composed of a compound containing no nitrogen atom and containing a reactive group (hereinafter, also referred to as "nitrogen-free organic compound") and a nitrogen-containing organic compound. The nitrogen-containing organic compound and the nitrogen-free organic compound are the same as those described in the aforementioned first production method.

Meanwhile, the boron compound is only required to be a compound containing a boron atom and may be, for example, elemental boron or a compound containing boron. The boron compound may contain only one type of compound, or two or more types of compounds. The boron compound is the same as that described in the first production method.

The total amount of the boron compound described above is only required to be 40 mass% or greater and 80 mass% or less, but is preferably 42 mass% or greater and 70 mass% or less, and more preferably 45 mass% or greater and 65 mass% or less, with respect to the total amount of the organic compound and the boron compound. When the amount of the boron compound with respect to the total amount of the organic compound and the boron compound is in the range described above, solid carbon quantum dots having the carbon nitride crystal structure and the graphite crystal structure described above is readily formed.

Note that, in this step, a compound other than the organic compound and the boron compound may be further mixed as long as the object and effect of the present invention are not impaired. However, the total amount of the organic compound and the boron compound in the mixture is preferably 50 mass% or more, and more preferably 70 mass% or more, with respect to the total amount of the mixture. When the total amount of the organic compound and the boron compound described above is 50 mass% or greater, the solid carbon quantum dots can be prepared efficiently. The compound other than the organic compound and the boron compound is the same as that described in the first production method.

The mixing method of the mixture is not particularly limited as long as the method can uniformly mix the organic compound, the boron compound, and optionally another compound. For example, mixing may be performed while grinding is performed in a mortar, or mixing may be performed while crushing is performed by a ball mill or the like. When the mixture is solid, the mixture is preferably mixed in a manner that the mixture has a substantially uniform particle size. Furthermore, in a case where the organic compound or the boron compound or another compound is a liquid, mixing may be performed by dissolving, blending, or dispersing a solid component in a liquid component. Alternatively, mixing may be performed by dissolving, blending, or dispersing each material in a small amount of a solvent. In this case, the amount and the type of the solvent are adjusted in a manner that heating in the heating step described below can be performed with substantially no solvent. Specifically, the amount and the type of the solvent are preferably adjusted in a manner that all the solvent is volatilized before the temperature of the mixture reaches a desired heating temperature.

When the mixture is solid, the particle size of the mixture can be evaluated by measuring the major axis of each particle by using an optical microscope. The average particle size of the mixture is preferably 0.1 μm or greater and 300 μm or less, and more preferably 0.1 μm or greater and 100 μm or less. Furthermore, 99% of the particle sizes of the particles contained in the mixture are preferably 0.1 μm or greater and 300 μm or less, and more preferably 0.1 μm or greater and 100 μm or less. When the particle size of the mixture is in the range described above, the mixture tends to be mixed uniformly, and solid carbon quantum dots can be prepared efficiently while presence of residual unreacted components is suppressed.

• Aqueous Solution Mixing Step

The amount of the aforementioned aqueous solution used in this step is only required to be 200 mass% or less, and is preferably 150 mass% or less, with respect to the mass of the mixture. When the amount of the aqueous solution falls within the above range, all the water is evaporated before the temperature of the mixture reaches a desired heating temperature. Therefore, carbon quantum dots can be prepared with substantially no solvent.

Here, the types of the alkali metal and alkaline earth metal contained in the aqueous solution are not particularly limited, and examples thereof include lithium, sodium, potassium, magnesium, calcium, and barium. The aqueous solution may contain only one alkali metal and alkaline earth metal, or two or more alkali metals and alkaline earth metals. The alkali metal and the alkaline earth metal are preferably sodium, potassium, or calcium from the viewpoint of reactivity, versatility, and the like. The aqueous solution can usually be an aqueous solution of an alkali metal salt and/or an alkaline earth metal salt. Counter ions of the alkali metal and the alkaline earth metal in the salts are not particularly limited, and may be, for example, hydroxy ions or halogen ions. Specific examples of the aqueous solution include an aqueous sodium hydroxide solution, an aqueous potassium hydroxide solution, an aqueous sodium fluoride solution, an aqueous sodium chloride solution, and an aqueous calcium chloride solution.

In addition, a concentration of the alkali metal salt or the alkaline earth metal salt may be in a range in which the amount of the alkali metal and the alkaline earth metal in the heating step which will be described below falls within a desired range.

• Heating Step

In the heating step, a composition obtained by mixing the aforementioned mixture with an aqueous solution containing an alkali metal and/or an alkaline earth metal is heated with substantially no solvent, and thus the aforementioned solid carbon quantum dots are prepared.

Here, the total amount of the alkali metal and the alkaline earth metal in the composition (composition obtained by mixing the mixture and an aqueous solution) when the heating step is performed is only required to be 0.1 mol% or more and 30 mol% or less, and is preferably 0.5 mol% or more and 20 mol% or less, and more preferably 1 mol% or more and 10 mol% or less, with respect to the sum of the numbers of moles of carbon atoms and nitrogen atoms contained in the organic compound and the boron compound described above. The alkali metal and the alkaline earth metal in the composition are mainly derived from the above-described aqueous solution, but a part thereof may be derived from the mixture (for example, derived from the organic compound, the boron compound, or another compound) as described above.

In this step, the mixture and the aqueous solution described above are mixed and then heated. The heating method is only required to be a method that can produce the solid carbon quantum dots by carbonizing the organic compound and the like, and examples thereof include heating by a heater and irradiation of electromagnetic wave. The heating temperature, heating time, electromagnetic wave irradiation method, irradiation time, and the like are the same as those in the first production method.

• Purification Step

In the purification step, the composition obtained in the heating step described above is purified, and unreacted components and side reaction components are removed. The method of purification is not particularly limited, and washing with an organic solvent is preferred.

The organic solvent used in the washing may contain only one type of compound or may contain two or more types of compounds. The organic solvent may be a polar solvent or a nonpolar solvent, and may be a mixed solvent of these. To remove unreacted components and side reaction components derived from the compound having a reactive group used in the mixture preparation step described above, at least one type of polar solvent is more preferably contained.

Specific examples of the polar solvent include methanol, ethanol, butanol, 1-propanol, dichloromethane, acetone, ethyl acetate, and acetonitrile. Among these, use of a mixed organic solvent, in which methanol and dichloromethane are mixed at a ratio of methanol/dichloromethane of 1:1, is preferred.

Application of Solid Carbon Quantum Dot

The solid carbon quantum dots described above have excellent emission characteristics. Thus, the solid carbon quantum dots can be used in various applications. The application of the solid carbon quantum dots is not particularly limited, and the solid carbon quantum dots can be used for, for example, solar batteries, displays, security inks, quantum dot lasers, biomarkers, lighting materials, thermoelectric materials, photocatalysts, and separating agents for a specific substance, based on the performance of the carbon quantum dots.

Note that the solid carbon quantum dots described above are solid at 25°C under 1 atm but may be used in various applications in a state of solution in which the solid carbon quantum dots are dispersed in a solvent or the like.

Note that the carbon quantum dots obtained by the above-described production method mainly emit fluorescence having a wavelength of 520 nm or more and 580 nm or less upon irradiation with excitation light in a blue wavelength region. In addition, the peak of the emission wavelength is sharp, the emission intensity is high in a wavelength range of 520 nm or more and 580 nm or less, and the emission intensity is low in other wavelength ranges. Therefore, the carbon quantum dots are very useful as a phosphor material for a white LED.

When the aforementioned solid carbon quantum dots (phosphor material for a white LED) are used in a white LED, a white LED device having an excellent luminous efficiency can be obtained by combining the carbon quantum dots with a blue LED having a wavelength of 420 nm or greater and 480 nm or less.

**EXAMPLES**

Hereinafter, specific examples of the present invention will be described together with comparative examples, but the present invention is not limited to these.

Example 1

## (1) Preparation Step of Raw Material Mixture

0.040 g of trisodium citrate dihydrate, 0.070 g of dicyandiamide, and 0.100 g of boric acid were mixed while being grounded in a mortar, and thus a mixture was prepared. At this time, granules of each reagent were thoroughly grounded to obtain a powder having substantially uniform particle sizes, and uniformly mixed.

## (2) Heating and Synthesis Step of Solid Phosphor

The powder mixture and a stirring bar were placed in a screw-top test tube with an internal volume of 15 mL, and the screw-top test tube was sealed with a screw cap with a rubber packing. The screw-top test tube was then heated at 170°C for 1.5 hours while nitrogen was purged in the screw-top test tube and the stirring bar was rotated by applying magnetic force from a stirrer to stir, and thus a solid phosphor composition was synthesized.

## (3) Washing and Purification Step by Solvent

The entire amount of the aforementioned solid phosphor composition was ground in a mortar to form a powder. This powder was dispersed in 10 mL of a mixed solvent with a ratio of methanol/dichloromethane of 1:1, and thus a dispersion was obtained. Thereafter, the dispersion was subjected to centrifugal separation (15000 rpm, 5 minutes) to collect insoluble solid precipitates, and the solvent and soluble components were removed. The washing with the solvent described above was repeated for a total of three times. The insoluble solid precipitates were dried at 60°C under reduced pressure for 6 hours to remove the residual solvent, and thus solid carbon quantum dots were obtained.

## (4) Confirmation of Light Emission State

The obtained solid carbon quantum dots were sandwiched in KBr plates and pressed, and a measurement sample was prepared. Furthermore, a measurement sample was prepared in the same manner as a sample before undergoing the washing and purification step described above. Then, the emission wavelength, external quantum efficiency, and internal quantum efficiency when these samples were irradiated with an excitation light were determined. The wavelength of the excitation light was a wavelength at which the internal quantum efficiency of the sample became maximum (maximum excitation wavelength), and an emission wavelength at this time was the maximum emission wavelength. The measurements described above were performed using a spectrofluorophotometer FP-8500 (available from JASCO Corporation) equipped with an integrating sphere unit ILF-835. Note that the aforementioned solid carbon quantum dots emitted yellow fluorescence under irradiation with light having a wavelength of 400 nm, and that the fluorescence was immediately quenched when the irradiation with the excitation light was stopped. The results are listed in Table 1.

For comparison, the light emission state for commercially available carbon nitride (product code: G0539, available from Tokyo Chemical Industry Co., Ltd.) and commercially available graphene carbon quantum dots (catalog number: 900726 50MG, available from Sigma-Aldrich) was also measured. Furthermore, the same measurement was performed for a sample obtained by uniformly mixing the carbon nitride and the graphene carbon quantum dots in a mass ratio of 8:2 in a mortar. The results are shown in Table 1.

## (5) X-Ray Diffraction Method

The obtained solid carbon quantum dot was analyzed by the X-ray diffraction method, and thus an X-ray diffraction spectrum thereof was obtained. The X-ray diffraction method was performed under the following condition using the following instruments.

    Instrument: PANalytical X'Pert PRO diffractometer, PIXcel detector
    Ray source: Cu tubular lamp
    Excitation voltage: voltage 40 kV, current 40 mA
    Measurement method: θ/2θ method
    Slit: DS = 1/2°
    Mask: 10 mm
    Scanning range: 5 deg to 90 deg
    Scanning step: 0.013 deg
    Scanning speed: 4 deg/min

The X-ray diffraction spectrum obtained for the solid carbon quantum dot of Example 1 is shown in FIG. 1. In the X-ray diffraction spectrum, a peak $P_{CN}$ assigned to the carbon nitride (g-$C_3N_4$) crystal structure having a maximum value at a diffraction angle 2θ of approximately 28° was confirmed. Furthermore, a peak $P_{Gr1}$ assigned to the graphite crystal structure and having a maximum value at a diffraction angle 2θ of approximately 11° was also confirmed. Furthermore, a peak $P_{Gr2}$ assigned to the graphite crystal structure and positioned at a diffraction angle 2θ of approximately 25° was also confirmed. Note that, the half width of the peak $P_{Gr2}$ assigned to the graphite crystal structure as determined taking a line connecting a point at which the diffraction (scattering) intensity is minimum in a diffraction angle 2θ of 11° or greater and 15° or less, and a point at which the diffraction (scattering) intensity is minimum in a diffraction angle 2θ of 34° or greater and 40° or less as a baseline was 12°. The crystallite size of the graphite crystal structure calculated from the half width was 0.7 nm. Note that the crystallite size was determined by the following the Scherrer equation.

$$L = K\lambda/(\beta\cos\theta)$$

L represents the crystallite size (crystallite diameter), K represents a Scherrer constant (0.9 for this time), β represents a half width, and θ represents a diffraction angle.

For comparison, commercially available carbon nitride (product code: G0539, available from Tokyo Chemical Industry Co., Ltd.) and commercially available graphene carbon quantum dots (catalog number: 900726 50MG, available from Sigma-Aldrich) were also subjected to X-ray diffraction. These results are also shown in FIG 1.
As is clear from FIG. 1, the solid carbon quantum dot prepared as described above had the carbon nitride crystal structure and the graphite crystal structure. Furthermore, the half width of the peak described above also clearly showed that the graphite was present as microcrystals.

(6) Observation by Transmission Electron Microscope (TEM)

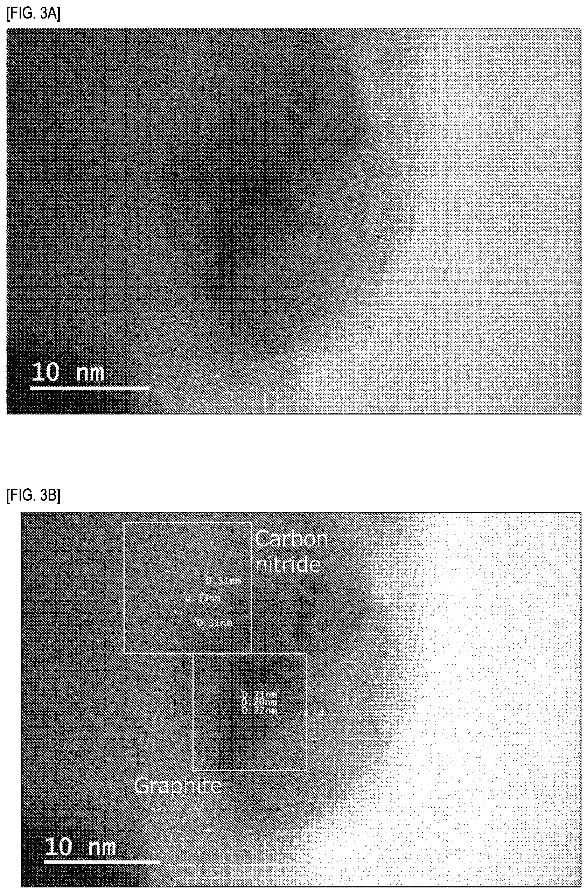

Images obtained in observation of the solid carbon quantum dot described above by using a transmission electron microscope are shown in FIG. 3A and FIG. 3B. In particular, as shown in FIG. 3B, the solid carbon quantum dot had a lattice fringe with d = 0.32 nm. This lattice fringe corresponds to a lattice spacing of (002) plane of carbon nitride and supports the presence of the carbon nitride crystal structure. Furthermore, the solid carbon quantum dot also had a lattice fringe with d = 0.21 nm. This lattice fringe corresponds to a lattice spacing of (100) plane of graphite and supports the presence of the graphite crystal structure.

(7) Analysis by Infrared Spectroscopy (IR)

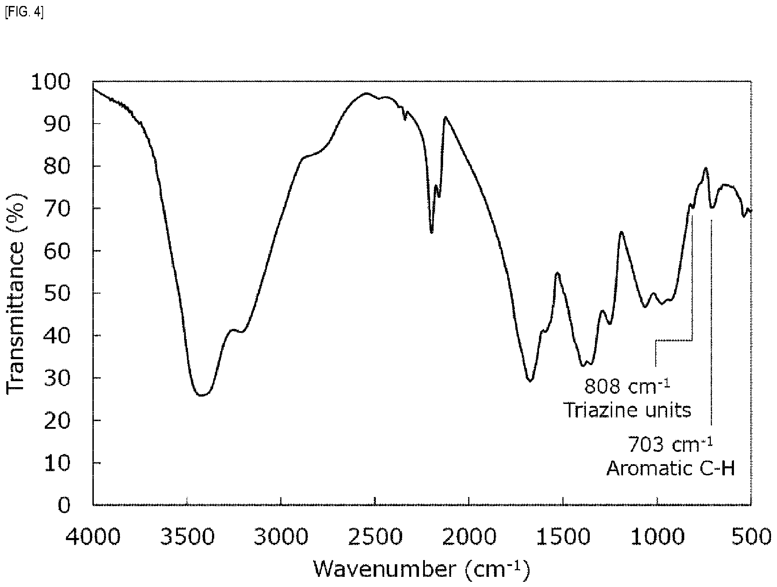

The solid carbon quantum dot described above was also analyzed by infrared spectroscopy (IR). The IR spectrum at this time is shown in FIG. 4. As shown in FIG. 4, the peak at 703 cm$^{-1}$ represents C-H originated from an aromatic substance and suggests the presence of the graphite crystal structure. Furthermore, the peak at 808 cm$^{-1}$ represents presence of a triazine ring and suggests the presence of the carbon nitride structure.

(8) Analysis by X-Ray Photoelectron Spectroscopy Spectrum (XPS)

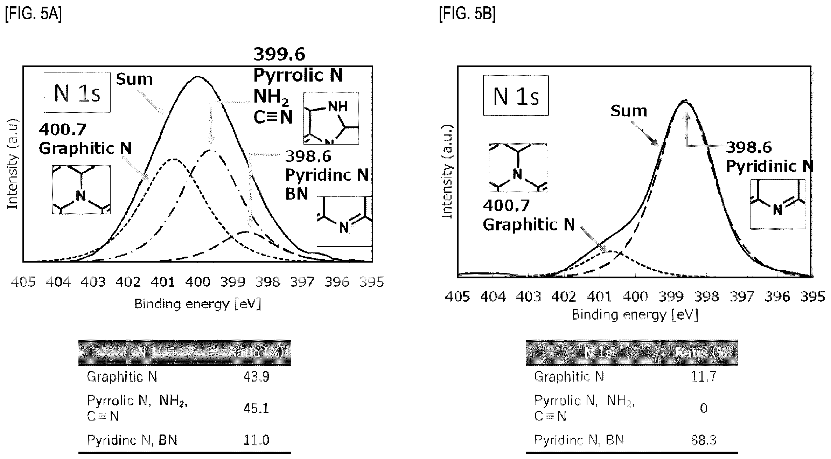

The solid carbon quantum dot described above was also analyzed by X-ray photoelectron spectroscopy spectrum (XPS). The XPS spectrum at this time is shown in FIG. 5A. Furthermore, for comparison, commercially available carbon nitride (product code: G0539, available from Tokyo Chemical Industry Co., Ltd.) was also analyzed by the X-ray photoelectron spectroscopy spectrum (XPS). The result is shown in FIG. 5B.

As shown in FIG. 5A, the solid carbon quantum dot described above included large amounts of graphene-like nitrogen and pyrrolic nitrogen. This indicates the presence of a nitrogen-doped graphene (graphite) structure. On the other hand, the carbon nitride included graphene-like nitrogen and pyridinic nitrogen in a ratio of 1:9 as shown in FIG. 5B, and this result was clearly different from that of the solid carbon quantum dot of the present application.

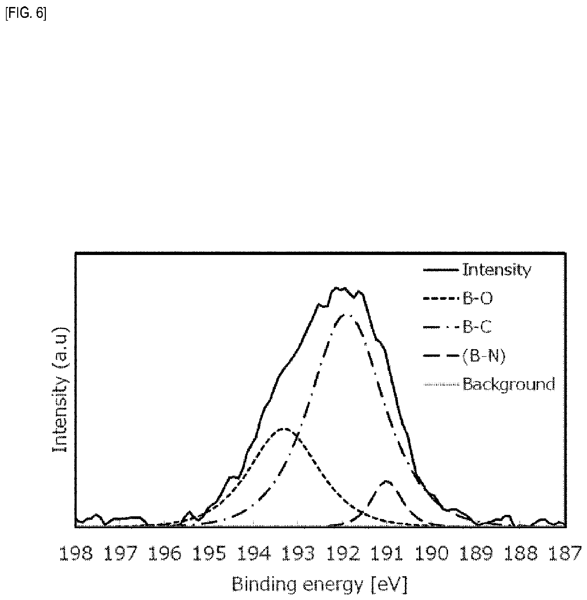

In addition, the analysis result for boron when the solid carbon quantum dot described above was analyzed by the X-ray photoelectron spectroscopy spectrum (XPS) is also shown. As shown in FIG. 6, the solid carbon quantum dot had B-C bonding.

Example 2

A mixture was prepared by mixing 0.051 g of trisodium citrate dihydrate, 0.088 g of dicyandiamide, and 0.120 g of boric acid by the same method as in Example 1. The mixture was subjected to the heating and synthesis step and the washing and purification step in the same manner as in Example 1, and thus solid carbon quantum dots were prepared. The light emission characteristics were evaluated for the obtained solid carbon quantum dots in the same manner as in Example 1. The XRD analysis was also performed. The results are listed in Table 1.

Example 3

A mixture was prepared by mixing 0.051 g of trisodium citrate dihydrate, 0.096 g of dicyandiamide, and 0.150 g of boric acid by the same method as in Example 1. The mixture was subjected to the heating and synthesis step and the washing and purification step in the same manner as in Example 1, and thus solid carbon quantum dots were prepared. The light emission characteristics were evaluated for the obtained solid carbon quantum dots in the same manner as in Example 1. The XRD analysis was also performed. The results are listed in Table 1.

[Table 1]

| | | Organic compound | Boron compound | Unpurified | | | | | Purified | | | | | XRD | | |
|---|---|---|---|---|---|---|---|---|---|---|---|---|---|---|---|---|
| | | Type and amount | Type and amount | Absorption percentage of excitation light (%) | Maximum excitation wavelength (nm) | Maximum emission wavelength (nm) | External quantum efficiency (%) | Internal quantum efficiency (%) | Absorption percentage of excitation light (%) | Maximum excitation wavelength (nm) | Maximum emission wavelength (nm) | External quantum efficiency (%) | Internal quantum efficiency (%) | Carbon nitride crystal structure | Graphite crystal structure | Half width of peak $P_{Gr2}$ of graphite crystal structure (°) |
| Examples | 1 | Trisodium citrate dihydrate 0.040 g + dicyandiamide 0.070 a | Boric acid 0.100 g | 50 | 400 | 530 | 31 | 61 | 52 | 400 | 530 | 34 | 65 | Presence | $P_{Gr1}$, $P_{Gr2}$ both present | 12 |
| | 2 | Trisodium citrate dihydrate 0.051 g + dicyandiamide 0.088 g | Boric acid 0.120 g | 52 | 400 | 530 | 31 | 60 | 53 | 400 | 530 | 33 | 63 | Presence | $P_{Gr1}$, $P_{Gr2}$ both present | 12 |
| | 3 | Trisodium citrate dihydrate 0.051 g + dicyandiamide 0.096 g | Boric acid 0.150 g | 54 | 400 | 530 | 33 | 62 | 51 | 400 | 530 | 34 | 66 | Presence | $P_{Gr1}$, $P_{Gr2}$ Presence | 12 |
| Carbon nitride | | | | - | - | - | - | - | 70 | 320 | 470 | 3 | 4 | Presence | $P_{Gr1}$, $P_{Gr2}$ both absent | - |
| Graphite carbon quantum dot | | | | - | - | - | - | - | 63 | 260 | 390 | 1 | 2 | None | $P_{Gr1}$, $P_{Gr2}$ both present | 12 |
| Mixture of carbon nitride: graphite carbon quantum dot = 8:2 (mass ratio) | | | | - | - | - | - | - | 72 | 280 | 470 | 2 | 2 | - | - | - |

As shown in Table 1 above, the solid carbon quantum dots which had the carbon nitride crystal structure and the graphite crystal structure and in which the graphite was microcrystals (half width being 2° or greater) had an internal quantum efficiency of 63% or greater, which is an extremely high value, for the excitation light at a wavelength of 400 nm (Examples 1 to 3). Furthermore, the solid carbon quantum dots all had a maximum emission wavelength at 530 nm and all emitted yellow light. Note that unpurified solid carbon quantum dot of each of Examples was also measured by X-ray diffraction method. The graph at this time is shown in FIG. 7. As shown in FIG. 7, the peak $P_{Gr1}$ assigned to the graphite crystal structure and having a maximum value at a diffraction angle $2\theta$ of approximately 11° was confirmed after the purification; however, in the unpurified case, no peak $P_{Gr1}$ was confirmed. It is conceived that the graphite crystal structure was not formed because the unpurified solid carbon quantum dots contained unreacted components and side reaction components and these prevented the approaching between the graphene structure layers. In contrast, it is conceived that, with the purification step described above, the aforementioned components were removed, the graphene structures approached each other and readily crystallized, and thus the peak $P_{Gr1}$ was confirmed. Due to the formation of such a graphite crystal structure, the external quantum efficiency and the internal quantum efficiency were improved.

Meanwhile, when carbon nitride and a graphene carbon quantum dot are respectively excited, the internal quantum efficiency was 4% or less, and efficient light emission was not achieved. Furthermore, with merely physically mixing carbon nitride and graphene quantum dots, the internal quantum efficiency was 2%, and high light emission efficiency like that of the solid carbon quantum dots described above could not be achieved.

The present application claims priority to Japanese patent application No. 2023-152277 filed on September 20, 2023. The contents described in the specification and drawings of the patent application are all incorporated herein by reference.

**INDUSTRIAL APPLICABILITY**

The solid carbon quantum dot according to an embodiment of the present invention is a novel quantum dot having excellent fluorescent emission characteristics when irradiated with light. The solid carbon quantum dot can be used, for example, as an alternative material to a yellow phosphor for a white LED. Additionally, the carbon quantum dot can be applied in various products such as various lighting materials and thermoelectric materials.

**Claims**

1. A solid carbon quantum dot comprising a carbon nitride crystal structure and a graphite crystal structure,

   an X-ray diffraction spectrum, obtained by an X-ray diffraction method, including
   a peak $P_{CN}$ assigned to the carbon nitride crystal structure and having a maximum value in a range of a diffraction angle $2\theta$ of greater than 26° and 29° or less, and
   a peak $P_{Gr1}$ assigned to the graphite crystal structure and having a maximum value in a range of a diffraction angle $2\theta$ of 10° or greater and 12° or less, and
   when a line connecting a point at which a diffraction (scattering) angle is minimum at a diffraction angle $2\theta$ of 11° or greater and 15° or less, and a point at which a diffraction (scattering) intensity is minimum at a diffraction angle $2\theta$ of 34° or greater and 40° or less is used as a baseline, a half width of a diffraction peak $P_{Gr2}$ assigned to the graphite crystal structure and positioned at a diffraction angle $2\theta$ of 25° being 2° or greater and 20° or less.

2. The solid carbon quantum dot according to claim 1, wherein
   the half width of the peak $P_{Gr2}$ is 8° or greater and 15° or less.

[FIG. 1]

EP 4 782 890 A1

[FIG. 2A]

[FIG. 2B]

[FIG. 2C]

[FIG. 3A]

[FIG. 3B]

[FIG. 4]

FIG. 5A

**399.6**
**Pyrrolic N**
**NH$_2$**
**C≡N**

N 1s    Sum

**400.7**
**Graphitic N**

**398.6**
**Pyridinc N**
**BN**

Intensity (a.u.)

405 404 403 402 401 400 399 398 397 396 395
Binding energy [eV]

| N 1s | Ratio (%) |
|---|---|
| Graphitic N | 43.9 |
| Pyrrolic N, NH$_2$, C≡N | 45.1 |
| Pyridinc N, BN | 11.0 |

FIG. 5B

N 1s

Sum

**398.6**
**Pyridinic N**

**400.7**
**Graphitic N**

Intensity (a.u.)

405 404 403 402 401 400 399 398 397 396 395
Binding energy [eV]

| N 1s | Ratio (%) |
|---|---|
| Graphitic N | 11.7 |
| Pyrrolic N, NH$_2$, C≡N | 0 |
| Pyridinc N, BN | 88.3 |

EP 4 782 890 A1

[FIG. 6]

[FIG. 7]

EP 4 782 890 A1

**EP 4 782 890 A1**

## INTERNATIONAL SEARCH REPORT

| International application No. |
|---|
| **PCT/JP2024/026452** |

| A. | CLASSIFICATION OF SUBJECT MATTER |
|---|---|

*G02B 5/20*(2006.01)i; *C09K 11/65*(2006.01)i; *H01L 33/50*(2010.01)i
FI:   G02B5/20; C09K11/65; H01L33/50

According to International Patent Classification (IPC) or to both national classification and IPC

| B. | FIELDS SEARCHED |
|---|---|

Minimum documentation searched (classification system followed by classification symbols)

G02B5/20; C09K11/65; H01L33/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/202385 A1 (KUREHA CORP.) 29 September 2022 (2022-09-29) paragraphs [0043], [0061], etc. | 1-2 |
| X | WO 2022/202384 A1 (KUREHA CORP.) 29 September 2022 (2022-09-29) paragraphs [0053], [0061], [0071], etc. | 1-2 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026452**

| Patent document cited in search report | | | Publication date (day/month/year) | Patent family member(s) | | | Publication date (day/month/year) |
|---|---|---|---|---|---|---|---|
| WO | 2022/202385 | A1 | 29 September 2022 | US | 2024/0174922 | A1 | |
| | | | | paragraphs [0046], [0065], etc. | | | |
| | | | | EP | 4317053 | A1 | |
| | | | | CN | 116917224 | A | |
| | | | | TW | 202248120 | A | |
| WO | 2022/202384 | A1 | 29 September 2022 | US | 2024/0166945 | A1 | |
| | | | | paragraphs [0055], [0063], [0073], etc. | | | |
| | | | | EP | 4317052 | A1 | |
| | | | | CN | 116917225 | A | |
| | | | | KR | 10-2023-0147679 | A | |
| | | | | TW | 202246174 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023152277 A

**Non-patent literature cited in the description**

- **MORSY et al.** Design and implementation of humidity sensor based on carbon nitride modified with graphene quantum dots. *Natureportfolio Scientific Reports*, 2023 (23), 2891
- **XIA et al.** Facile preparation of metal-free graphitic-like carbon nitride/graphene oxide composite for simultaneous determination of uric acid and dopamine. *Microchemical Journal*, 2023 (190), 108726

- **CHENYU et al.** Sulfur-doped graphitic carbon nitride decorated with graphene quantum dots for an efficient metal-free electrocatalyst. *Journal or Materials Chemistry A*, 2015, vol. 3, 1841-1846